(19) Europäisches Patentamt
European Patent Office
Office européen des brevets

(11) **EP 1 845 729 A1**

(12) **EUROPEAN PATENT APPLICATION**

(43) Date of publication:
**17.10.2007 Bulletin 2007/42**

(51) Int Cl.:
**H04N 7/26** *(2006.01)* **H04N 7/30** *(2006.01)*

(21) Application number: **06007740.1**

(22) Date of filing: **12.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **MATSUSHITA ELECTRIC INDUSTRIAL CO., LTD**
**Kadoma-shi, Osaka 571-8501 (JP)**

(72) Inventors:
• **Wittmann, Steffen**
**63225 Langen (DE)**
• **Wedi, Thomas, Dr.**
**63225 Langen (DE)**

(74) Representative: **Grünecker, Kinkeldey, Stockmair & Schwanhäusser**
**Anwaltssozietät**
**Maximilianstrasse 58**
**80538 München (DE)**

(54) **Transmission of post-filter hints**

(57) The present invention determines additional *a priori* information in an image encoder based on the undisturbed input image signal. As the original image data is not available in a decoder, a conventional decoder can only use decoded image data for determining adaptive filter coefficients. However, the decoded image data includes disturbances, for instance, quantization noise. The present invention generates additional filter data in an encoder based on the undisturbed image data. The additional data is attached to the corresponding encoded image data and provided to the decoder. The decoder analyzes the filter information and determines an adaptive set of filter parameters with respect to the additional *a priori* information. Based on the determined filter parameters, an adaptive filtering of the decoded image data is performed. In this way, the decoder applies an improved filtering.

Fig. 5

**Description**

The present invention relates to the encoding and decoding of motion picture video data. Particularly, the present invention relates to a method and an apparatus for encoding and decoding video data, including an adaptive filtering of the image data.

Motion pictures are being adopted in increasing numbers of applications, ranging from video-telephoning and video-conferencing to digital television and DVD. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 / AVC or MPEG-4 / AVC.

The encoding approach underlying most of these standards consists of the following main stages:

(i) Dividing each individual frame into blocks of pixels in order to subject each video frame to data compression at a block level.

(ii) Reducing spatial redundancies within a video frame by applying each block of video data to a transform from the spatial domain into the frequency domain.

(iii) Quantizing the resulting transform coefficients. In this way, the data volume of the encoded image data is reduced.

(iv) Entropy encoding the quantized transform coefficients.

The original transform coefficient values cannot be recovered from the quantized transform coefficients due to a data loss introduced by said quantizing operation. The resulting image quality is impaired by a corresponding quantizing noise

In order to further minimize the data volume of the encoded image data, an optional fifth stage can be added to the above coding approach:

(v) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

During the encoding and decoding on the image data, several disturbances are added to the image. For example, a quantization noise is added when the DCT coefficients are quantized. Further, blocking effects will occur when the image is separated into a plurality of image blocks and each block is encoded separately.

In order to improve the image quality of the decoded image data, the decoded image data is filtered. For example, blocking effects are reduced by smoothing the pixels at the border of each block. For this purpose, a linear filtering is applied to the relating pixel values at the block borders. In this way, the subjective image quality may be improved.

However, such a filter only addresses to some particular pixels at the border of an image block. There is no filtering applied to the inner pixel values of a block. For example, the filtering is performed by employing a linear filter having predetermined filter coefficients. Hence, the filter does not consider the content of the current image. In particular, the filter does not consider whether the image contains sharp details or only a smooth area.

In order to further improve the image quality, an adaptive filtering may be applied, for instance, by analyzing the content of the images. For example, the content of the currently and / or previously encoded image data is analyzed and the filter parameters are adapted depending on the analyzed image data. In this way, a further improvement of the subjective image quality is achieved.

A conventional adaptive filter is determining the filter parameters depending on disturbed image data of currently or previously decoded images. Although, a user may consider the filtered image data as a subjective "better" image, there is still an unknown difference between a filtered image and the undisturbed "true" image.

US-A-2005/0105 627 describes an adaptive filtering of a video sequence. In order to adapt the filter to the current image data, motion and noise of the current decoded image data is estimated. Based on the estimated motion and noise, an iterative determination of filter parameters is carried out.

However, the improvement of the image quality by an adaptive filtering is limited. A further enhancement of the image quality is only achieved by increasing the data rate of the encoded image data. Thus, the image quality is limited by the storage capacity of a recording medium or the bandwidth of a transmission line.

The present invention aims to enhance the image quality of decoded image data.

This is achieved by the features of the independent claims.

According to a first aspect of the present invention, an image decoder for decoding a sequence of encoded image data is provided. The decoder includes a decoding unit, a filter, a filter information extracting unit and a filter parameter determining unit. The decoding unit decodes encoded image data. Filter data is extracted from the encoded image data by the filter information extracting unit. The filter parameter determining unit determines a filter parameter based on the extracted filter data. The filter performs a filter operation in accordance with the determined filter parameter.

According to a second aspect of the present invention, a method for decoding a sequence of coded image data is provided. Encoded image data is decoded. Filter data is extracted from the encoded image data, and a filter parameter is determined based on the extracted filter data. A filter operation is performed in accordance with the determined filter parameter.

According to a further aspect of the present invention, an image encoder for encoding a sequence of images is provided. The encoder includes an encoding unit and a filter data generator. The encoding unit encodes image data. The filter data generator determines filter data based on the image data to be encoded. The generated image data serves as a basis for determining an adaptive filter parameter in an image decoder. The generated filter data is inserted into the encoded image data.

According to still a further aspect of the present invention, a method for encoding a sequence of images is provided. Image data is encoded. Filter data is determined based on the image data to be encoded. The determined filter data serves as a basis for determining an adaptive filter parameter for filtering decoded image data. The filter data is inserted into the encoded image data.

It is the particular approach of the present invention to determine a filter parameter for an adaptive filter in an image decoder, based on additional *a priori* information. The *a priori* information is generated based on uncorrupted image data, during the encoding of an image sequence. In particular, the undisturbed input signal of an image encoder is used as the basis for generating the additional *a priori* information.

As the uncorrupted image data is not available in a decoder, the generation of this additional filter information is carried out by an encoder during the encoding of the image data. The additional filter information is added to the corresponding encoded image data and provided to the decoder. The decoder analyzes the provided filter information and sets up the filter parameters in accordance with the filter information. In this way, the image quality of the filtered image data is improved. As each decoder determines the filter parameters separately, different filter parameters may be determined, depending on the configuration and the available resources of an image decoder.

Preferably, the filter data is determined based on at least one of contrast, activity, statistical information or a model parameter of the image data to be encoded. By analyzing this data, additional filter data can be generated, allowing an improved set-up of an adaptive filter for filtering decoded image data.

Preferably, the image encoder further includes a decoding unit for decoding the encoded image data. The additional filter data is determined based on the image data to be encoded and the corresponding decoded image data. In this way, it is possible to determine the differences between the available decoded image data and the corresponding uncorrupted image data. Based on this difference, an indication is given to the decoder for minimizing the difference between decoded image data and uncorrupted image data. Preferably, a cross-correlation is calculated between the image data to be encoded and the corresponding decoded image data. Preferably, the decoder includes a Wiener filter and the filter parameters are determined in order to set up the Wiener filter.

Preferably, the image is divided into a plurality of image blocks and each block is encoded separately. Accordingly, individual filter data are generated for each image block.

According to another preferred embodiment, the image is divided into a plurality of image areas and the filter data is determined for each area individually. In this way, different filter parameters may be applied to the different areas of an image. An image area may relate, for instance, to a row, a column, or a slice of an image.

According to still another embodiment, the filter data is determined for a complete image or even for a sequence of a plurality of images. By transmitting only one set of filter data for a plurality of images, the amount of the additional filter data can be reduced.

Preferably, image data is separated into a plurality of components and filter data is determined for each component individually. Preferably, separate filter data is determined for each colour component. According to another preferred embodiment, a separate filter data is determined for each luminance and chrominance component. Preferably, the decoder is determining separate filter parameters for each component of the decoded image data.

Preferably, the filter data is inserted into the header of the encoded image data. Accordingly, a decoder extracts the filter data from the corresponding encoded image data.

According to another preferred embodiment of the present invention, the filter data is inserted into the encoded image data in an additional message. Preferably, the message is a supplemental enhancement information (SEI) message. Accordingly, a decoder can analyze the filter data of this message.

Preferably, an image encoding and decoding system includes an image encoder and an image decoder.

The above and other objects and features of the present invention will become more apparent from the following description of the embodiments, in which:

Fig.1 schematically illustrates a block diagram form the configuration of a conventional hybrid video encoder;

Fig. 2 schematically illustrates a block diagram form the configuration of a convention hybrid video decoder;

Fig. 3 schematically illustrates in a block diagram form the configuration of a video encoder with a filter data generation in accordance with the present invention;

Fig. 4 schematically illustrates in a block diagram form the configuration of a video encoder including an additional decoding unit;

Fig. 5 schematically illustrates in a block diagram form the configuration of a video decoder with an enhanced filter parameter determination in accordance with the present invention;

Fig. 6 schematically illustrates in a block diagram form the configuration of hybrid video encoder employing a filter data generation; and

Fig. 7 schematically illustrates in a block diagram form the configuration of a hybrid video decoder including an additional filter parameter determination according to the present invention.

The present invention relates an adaptive filtering of disturbed image data, especially to a filtering of image data disturbed during an encoding and subsequent decoding process. Modem image recording / transmitting systems aim to reduce the data volume by compressing the image data. For this purpose, an encoder is compressing the image data before recording or transmitting and a decoder is uncompressing the compressed data for a reproduction.

Although it is possible to implement the present invention in an hybrid video encoder, the present invention is not limited to a video encoder employing image prediction. Rather, the present invention can be also realized by any other image encoding device.

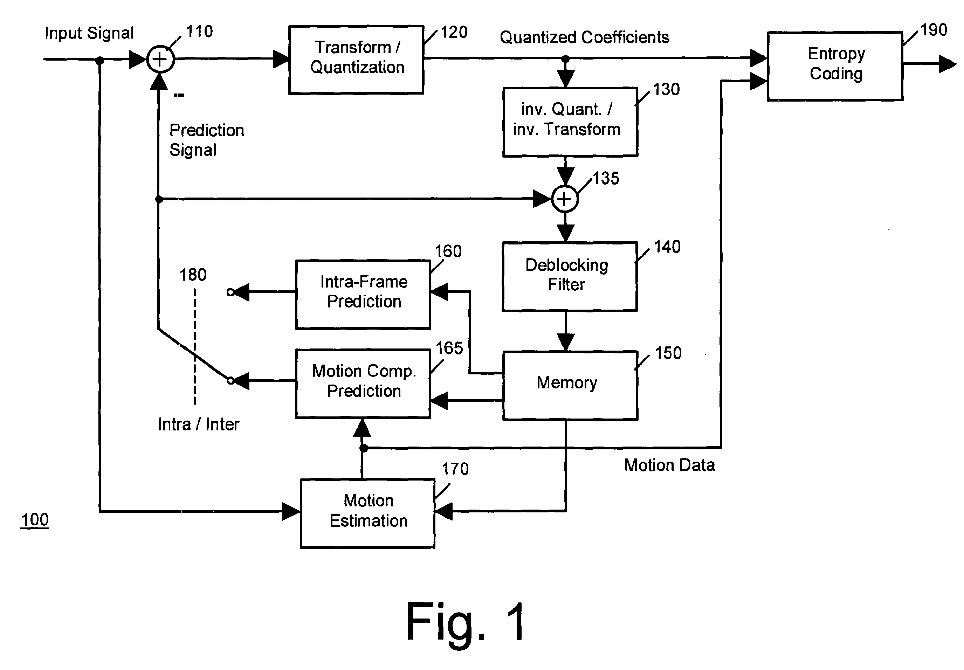

Referring to Fig. 1, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 1 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 1, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

This is accomplished by a motion estimator unit 170, receiving the current input signal and the locally decoded images.

Based on the results of motion estimation, motion compensation performed by motion compensation prediction unit 165 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. A switch between Intra-mode, i.e. a processing by Intra-frame prediction unit 160, and Inter-mode, i.e. a processing by motion compensation prediction unit 165, is controlled by Intra/Inter switch 180.

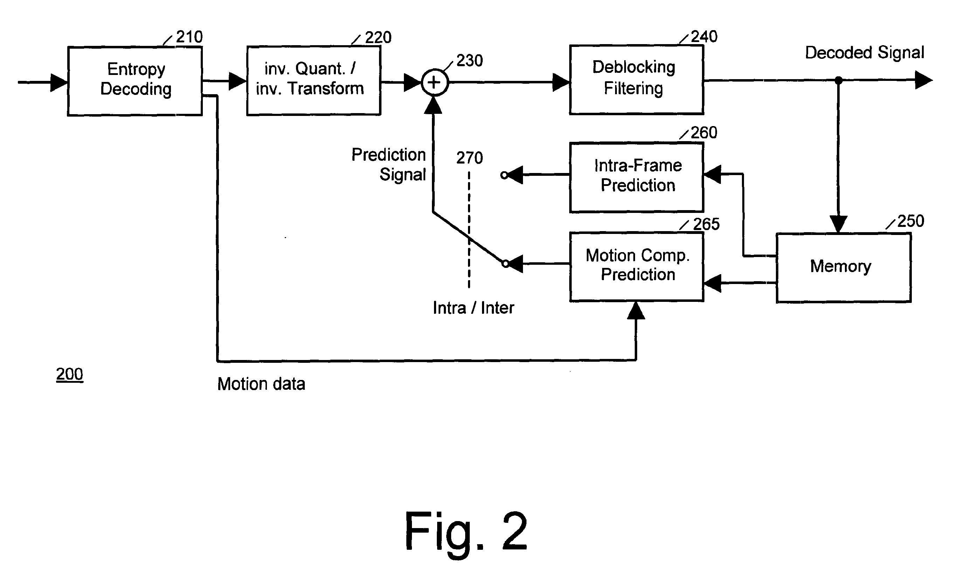

For reconstructing the encoded images at the decoder side, the encoding process is applied in reverse manner. A schematic block diagram, illustrating the configuration of the corresponding decoder generally denoted by reference numeral 200, is shown in Fig. 2. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

De-blocking filters 140 and 240 only aim to reduce the de-blocking effects by smoothing the edges of the macro blocks. For example, the de-blocking filter can be realized by a linear filtering of the image data near to the borders on the image blocks. However, such a de-blocking filter does not confirm any further image improvement, for instance, to reduce the quantization noise, or to remove any distortions caused during the encoding / decoding process

In order to further improve the image quality of the decoded image data, an additional filter may be applied after decoding the image data. For this purpose, the de-blocking filter is either substituted by another filter, or an additional filter is employed after the de-blocking filter. However, when always using the same filter coefficients for filtering the decoded image data, the enhancement of the image quality varies depending on the content of the images. In order to further improve the image quality, the coefficients of the filter may be adapted according to the present image data.

When performing an adaptive filtering, the disturbed image data is analyzed and different filter coefficients are determined, depending on the properties of the image data. For example, the image may be either sharpened or smoothed, depending on the content of the present image data. In a conventional image decoder, the analysis for determining the adaptive filter coefficients is based on the corrupted image data. As this image data includes errors, for instance, quantization noise, it is not possible to determine an optimum set of filter coefficients based in this data.

In order to further improve a set-up of an adaptive filter, and to determine better filter parameters, additional information is used for determining the filter parameters. For example, the uncorrupted image data can be analyzed in order to identify additional information which has been lost during the encoding and successive decoding of the image data.

In order to compensate this data loss, and to enable an improved filtering of the decoded image data, additional a *priori* information is determined in the image encoder and provided to the decoder. Based on this a *priori* information, an enhanced set of filter parameters is determined for an adaptive filtering of the decoded image data.

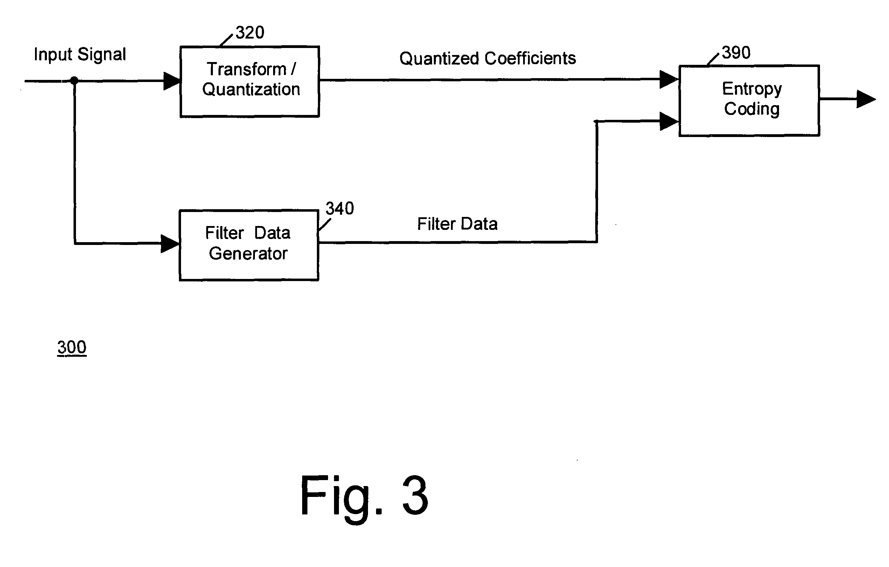

Fig. 3 illustrates an encoder according to a first embodiment of the present invention. The encoder receives image data of a current image, and employs a discrete cosine transform (DCT) and a quantization of the DCT coefficients. The filter data generator 340 analyzes the current image data and generates additional filter data, which can be used for a determination of adaptive filter parameters. The additional filter data is provided to coding unit 390. The coding unit combines the encoded image data and the corresponding filter data in a single bit stream. In this way, the filter information is transmitted or recorded together with the encoded image data.

Different approaches for determining the additional filter parameters are possible. For example, the filter data may relate to the contrast, the brightness or particular colour characteristics of the image data. It is also possible to compute a characteristic ratio between the high frequency and the low frequency components of the image data, or to analyze the statistical characteristic, for instance, standard deviation of the pixel values. An information can be generated, indicating whether the current image data contains sharp details or relates to a flat scene.

It is also possible to analyze the activity in the current image data. For example, the filter data may describe a degree or a frequency of changes in the current image data. It is also possible to indicate when a scene change occurs.

It is also possible to analyze the structure of the image data, or to determine particular patterns, or other characteristics of the image data. The filter data may include the determined information either directly or as parameters of a particular model describing the properties of the image data. Any other information for enabling an enhanced set-up of an adaptive filter may be possible.

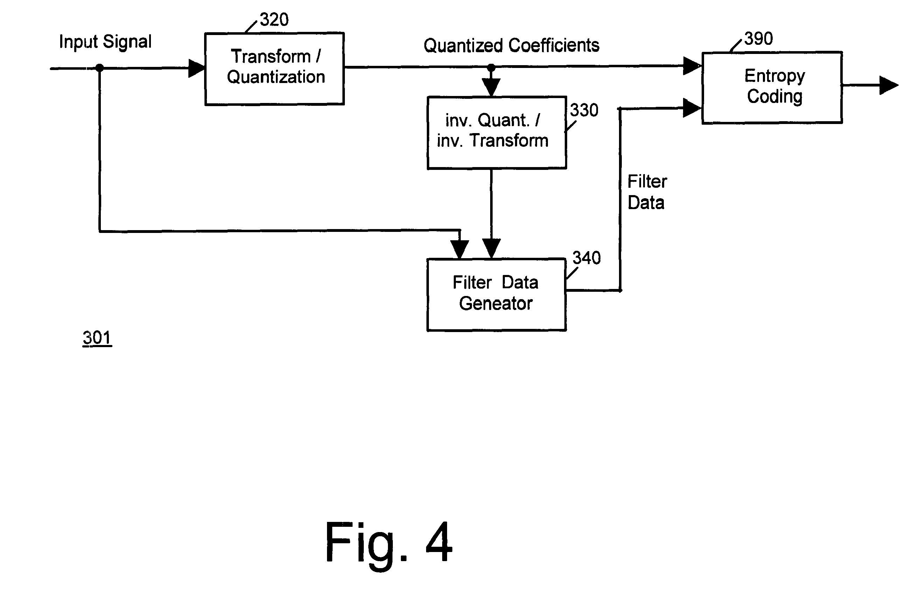

Further to this filter data generation, which is only based on the undisturbed input signal, it is also possible to compare the undisturbed input signal and the resulting image after decoding the encoded image data. For this purpose, an additional decoding unit 330 is included in the image encoder, as illustrated in Fig. 4. The image decoding unit 330 performs an inverse quantization and an inverse cosine transform of the encoded image data. Filter data generator 340 compares undisturbed image data and decoded image data. In this way, the filter data may include information on how to adapt the adaptive image filter in order to minimize the quantization noise, or to compensate other errors of the encoded image data.

For example, filter data generator 340 calculates a cross-correlation between the undisturbed image data and the corresponding decoded image data. The values of this cross-correlation function are inserted in the corresponding encoded image data. Any other information relating to the differences between undisturbed and disturbed image data is possible.

In order to provide the additional filter data together with the encoded image data, a single bit steam is generated. For this purpose, the filter data can be inserted into the header of an encoded image data sequence. Alternatively, the filter data can be inserted into the encoded image data as a separate information message. For example, the information are transmitted in an Supplemental enhancement information message (SEI-message). In this SEI-message, the filter data is included as additional data fields. In this way, a conventional decoder is reading the encoded image data and the SEI-message. If the decoder cannot use the additional filter parameter data, the decoder may skip the corresponding data and decode the image data in a conventional manner. Otherwise, if the decoder is adapted to perform a filtering by means of transmitted filter data, the decoder may extract the filter data and determine the filter parameter accordingly. An example of a SEI-message for transmitting the filter coefficients is shown in table 1. In this example, the filter data is included as optional post-filter hints. Table 2 illustrates an exemplary syntax for transmitting the filter data.

In this example, an SEI message is shown providing the decoder with some information that is available at the encoder only. With this information, it is possible to design an efficient post-filter on decoder-side. The parameter number_of_elements specifies the number of transmitted filter data. The scaling of the filter data is specified by scaling_factor. Each filter data is divided by the scaling_factor before using it in the decoder. This is important for fractional values. The parameter filter_hint[element] specifies the up-scaled filter hints. Each filter data is divided by scaling_factor before using it in the decoder.

| sei_payload( payloadType, payloadSize ) { | C | Descriptor |
|---|---|---|
| if( payloadType = = 0 ) | | |
|    buffering_period( payloadSize ) | 5 | |
| else if( payloadType = = 1 ) | | |
|    pic_timing( payloadSize ) | 5 | |
| else if( payloadType = = 2 ) | | |
|    pan_scan_rect( payloadSize ) | 5 | |
| else if( payloadType = = 3 ) | | |
|    filler_payload( payloadSize ) | 5 | |
| else if( payloadType = = 4 ) | | |
|    user_data_registered_itu_t_t35( payloadSize ) | 5 | |
| else if( payloadType = = 5 ) | | |
|    user_data_unregistered( payloadSize ) | 5 | |
| else if( payloadType = = 6 ) | | |
|    recovery_point( payloadSize ) | 5 | |
| else if( payloadType = = 7 ) | | |
|    dec_ref_pic_marking_repetition( payloadSize ) | 5 | |
| else if( payloadType = = 8 ) | | |
|    spare_pic( payloadSize ) | 5 | |
| else if( payloadType = = 9 ) | | |
|    scene_info( payloadSize ) | 5 | |
| else if( payloadType = = 10 ) | | |
|    sub_seq_info( payloadSize ) | 5 | |
| else if( payloadType = = 11 ) | | |
|    sub_seq_layer_characteristics( payloadSize ) | 5 | |
| else if( payloadType = = 12 ) | | |
|    sub_seq_characteristics( payloadSize ) | 5 | |
| else if( payloadType = = 13 ) | | |
|    full_frame_freeze( payloadSize ) | 5 | |
| else if( payloadType = = 14 ) | | |
|    full_frame_freeze_release( payloadSize ) | 5 | |
| else if( payloadType = = 15 ) | | |
|    full_frame_snapshot( payloadSize ) | 5 | |
| else if( payloadType = = 16 ) | | |
|    progressive_refinement_segment_start( payloadSize ) | 5 | |
| else if( payloadType = = 17 ) | | |
|    progressive_refinement_segment_end( payloadSize ) | 5 | |
| else if( payloadType = = 18 ) | | |
|    motion_constrained_slice_group_set( payloadSize ) | 5 | |

| | C | Descriptor |
|---|---|---|
| else if( payloadType = = 19 ) | | |
|     film_grain_characteristics( payloadSize ) | 5 | |
| else if( payloadType = = 20 ) | | |
|     deblocking_filter_display_preference( payloadSize ) | 5 | |
| else if( payloadType = = 21 ) | | |
|     stereo_video_info( payloadSize ) | 5 | |
| else if( payloadType = = 22 ) | | |
|     post_filter_hints( payloadSize ) | 5 | |
| else | | |
|     reserved_sei_message( payloadSize ) | 5 | |
| if( !byte_aligned( ) ) { | | |
|     bit_equal_to_one  /* equal to 1 */ | 5 | f(1) |
|     while( !byte_aligned( ) ) | | |
|       bit_equal_to_zero  /* equal to 0 */ | 5 | f(1) |
|     } | | |
| } | | |

Table 1: Example of SEI payload syntax

| post_filter_hints ( payloadSize ) { | C | Descriptor |
|---|---|---|
| number_of_elements | 5 | ue(v) |
| scaling_factor | 5 | ue(v) |
| for (element = 0; element < number_of_elements; element ++) { | | |
|     filter_hint[element] | 5 | se(v) |
| } | | |
| } | | |

Table 2: Example of SEI payload syntax for transmitting post-filter data

When an image sequence is encoded each image is separated into a plurality of image blocks, and each image block is encoded separately. Accordingly, it is possible to determine a separate set of filter data for each image data block. In this way, a very precise determination of filter parameters for filtering can be achieved. However, when transmitting separate filter data for each image block, a large amount of additional filter data has to be inserted into the encoded image data and transferred to the decoder.

In order to reduce the data volume of the additional filter data, only one set of filter data is computed for a plurality of image blocks. For example, a filter data generation may be carried out for a complete image. Alternatively, the image can be separated into a plurality of image areas, for instance, slices. For example, each slice comprises a plurality of image blocks relating to the same image row or column. Based in this separation, filter data is determined for each slice. Other combinations of image blocks or other separations of the image into image areas for determining individual filter data are possible.

Alternatively, the filter data is determined on a basis of complete images. For example, one set of filter data is determined and transmitted for each image. However, it is also possible to determine common filter data for a plurality of images, frames of fields. For example, the filter parameters are determined on a basis of group of pictures (GOP), successive images of a complete scene, or any other predetermined number of images.

Image data of a color image may include separate image data for each color component. For example, the image data of red (R), green (G), and blue (B) image data may be encoded separately. Alternatively, the image data may included separate data elements for luminance (Y) and chrominance (Cr, Cb). Any other separation of the image data into separate components is possible. In order to obtain an optimized set of filter data, the filter data can be determined separately for the image data of each color component.

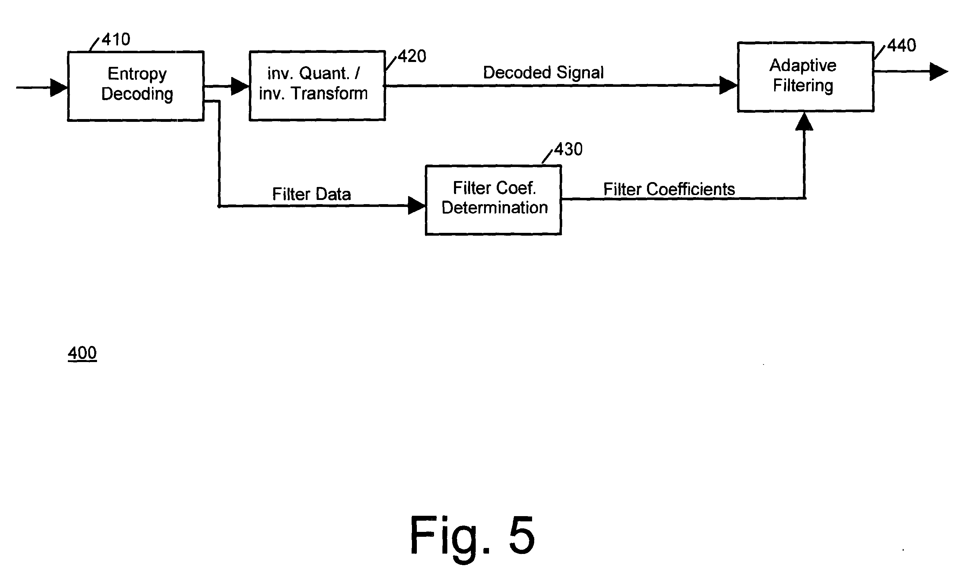

Fig. 5 illustrates an image decoder for decoding encoded image data according to the present invention. Decoder 410 extracts the filter data from the encoded image data and provides the extracted data to filter parameter determination unit 430. Based on the extracted additional filter information, adapted filter parameters are determined and provided to filter 440. The decoded image data is filtered based on the determined filter parameters.

Each decoder determines an adapted set of filter parameters separately. In this way, it is possible to consider the individual computational resources of the decoders. On the one hand side, a decoder of a mobile device, comprising only a slow processor and a small display panel, may perform a filter operation using only a small number of filter coefficients. On the other hand side, a high-end decoder for outputting image data on a large display may include a fast and powerful filter processor. Thus, such a decoder determines more filter coefficients and applies a more complex filter operation. Even different filter operations in the same image decoder may be possible. For example, a decoder may provide a power-saving mode, wherein only a small number of filter coefficients is determined and a power-consuming high quality mode, wherein more filter parameters are determined and applied to the decoded image data.

When an image decoder extracts the additional filter data, different methods for determining the filter parameters are possible. For example, a decoder may store a plurality of predetermined sets of filter parameters. Based on the obtained filter data, one set of predetermined filter parameters is selected and provided to the filter. For example, when the filter data indicates a flat image, a filter parameter is selected for smoothing the decoded image data. Otherwise, when it is indicated in the filter data that the image includes fine details, a set of filter parameters for sharpening the image may be selected.

Other classes of filter parameters are also possible. For example, a set of filter parameters can be selected depending on the activity in the image, the statistical characteristics, the ratio between high frequency and low frequency components or any other classification. It is also possible to apply different filter parameters depending on the genre of the present image sequence. For example, different filter parameters can be applied to a sports sequence, to news and documentation or a music clip.

Alternatively, it is also possible to compute the filter parameters based on the extracted filter data. For example, the values of the filter coefficients may be calculated based on the ratio between high frequency and low frequency components, the contrast, the brightness, the statistical characteristics of the current image data, or any other values included in the additional filter data.

When the filter data relates to a comparison between the undisturbed image data and the corresponding decoded image data, which has been carried out in the encoder, the filter parameters can be determined in order to minimize the difference between uncorrupted and the corresponding decoded image data. For this purpose, the filter data information may give a hint how to minimize the difference between the decoded and undisturbed image data. For example, a cross-correlation between the undisturbed image data and the corresponding decoded image data, which has been calculated in the encoder, can be used as a basis for calculating the filter coefficients in the decoder. For example, an adaptive Wiener filtering can be implemented when the cross-correlation between uncorrupted and decoded image data is transmitted as additional filter data. Other information for describing the difference between the corrupted and the uncorrupted image data are possible. It is also possible to employ another filter for filtering the decoded image data.

The class of Wiener filter comprises all linear optimum time-discrete filters. The goal of the Wiener filter is to filter out noise having a statistical character. In the case of video coding the quantization noise is considered as a noise that is added to the original video signal. Wiener filters are designed to minimize a mean-square error between the output of the filter and a desired uncorrupted signal.

In order to determine a set of M filter parameters w for a Wiener filter, an MxM auto-correlation matrix R of the corrupted image data and a Mx1 cross-correlation vector p between the corrupted and the original image data has to be computed. With these computational results, the filter coefficients are determined to:

$$w = R^{-1} \times p \, ;$$

wherein $R^{-1}$ denotes the inversion of the auto-correlation matrix R.

Based on the filter parameters w, the filtered data is obtained by a convolution of the disturbed data with the filter coefficients.

For example, a two dimensional 3x3 tap-filter requires nine filter coefficients:

$$w = \begin{pmatrix} w_{11} & w_{12} & w_{13} \\ w_{21} & w_{22} & w_{23} \\ w_{31} & w_{32} & w_{33} \end{pmatrix}.$$

In order to determine these filter coefficients, a 9x9 element auto-correlation matrix and a 9x1 cross-correlation vector are required.

$$R = \begin{pmatrix} R_{11} & \cdots & R_{19} \\ \vdots & \ddots & \vdots \\ R_{91} & \cdots & R_{99} \end{pmatrix} ; \quad p = \begin{pmatrix} p_1 \\ \vdots \\ p_9 \end{pmatrix}.$$

As only the decoded image data is necessary for computing the auto-correlation matrix, this matrix can be generated directly by the decoder. However, the cross-correlation vector requires the knowledge of the uncorrupted image data and the corresponding corrupted data. Thus, this vector can only be determined by the encoder.
For instance, an exemplary a cross correlation vector could be computed to:

$$p = \begin{pmatrix} 15231 & 15403 & 15232 & 15367 & 15548 & 15367 & 15230 & 15401 & 15229 \end{pmatrix}.$$

The values of this cross correlation vector are inserted in the encoded image data as filter data. In the decoder, the auto correlation function can be computed. Based on the computed auto correlation and the received cross correlation valued, a 2-dimensional 3x3 filter matrix can be calculated to:

$$w_{3x3} = \begin{pmatrix} -0.03495 & 0.05748 & -0.02351 \\ 0.05896 & 0.88896 & 0.05978 \\ -0.02719 & 0.06011 & -0.03945 \end{pmatrix}.$$

In order to obtain a filtered image value, the corrupted pixel value 229 and its neighboring pixel values are applied to the filter according to the following formula:

$$s_{filtered} = \begin{pmatrix} 192 & 225 & 255 \\ 146 & 229 & 255 \\ 132 & 198 & 252 \end{pmatrix} \cdot w = 227.47.$$

Thus, a value of 227.47 is obtained which is clipped to the pixel value 227. In that case, the decoded and filtered pixel value of 227 is the same as the original pixel value of 227.
In this example, a two dimensional 3x3 tap-filter is described. However, any other size or dimension of a filter may be possible. For example, the filter may also be employed as one dimensional filter. Any number of filter coefficients is possible. For instance, a 7x7 tap-filter may be also used. By increasing the number of filter coefficients, the accuracy of the filter is improved. Each decoder is determining the filter parameters individually. Hence a different filtering of the image data is possible depending on the resourced and requirements of the decoders.

In the above-described examples, the adaptive filter is employed as an additional post-filter. The adaptive filtering is applied to all decoded image data. However, it is also possible to apply the adaptive filtering only to particular images. For example, the filter data may also include an indication whether or not an adaptive filtering should be applied to the current image data. In an image system providing a plurality of coding modes, it is also possible to apply a different filtering depending on the current coding mode.

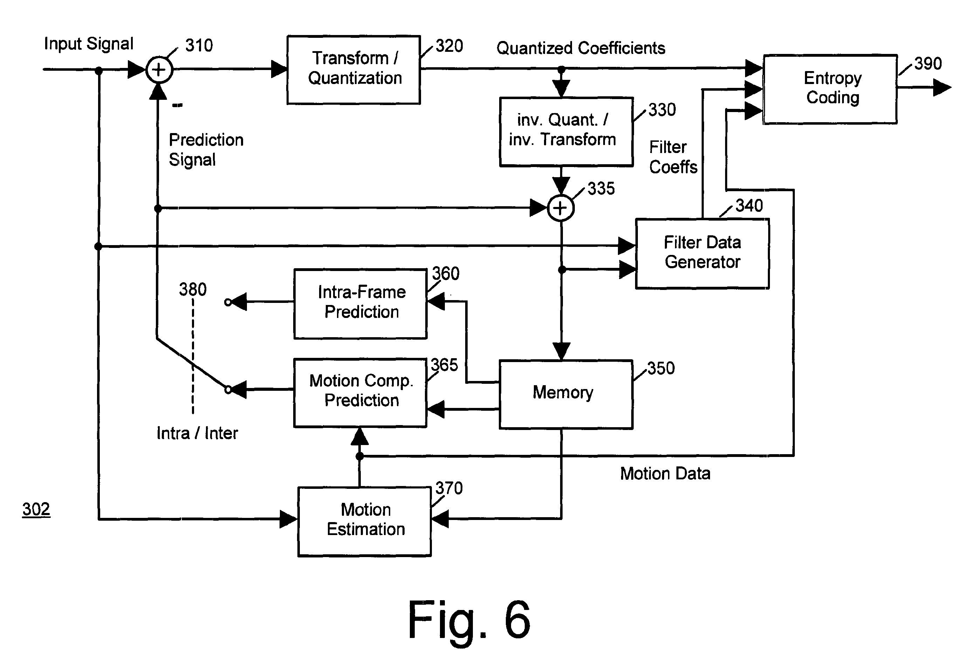

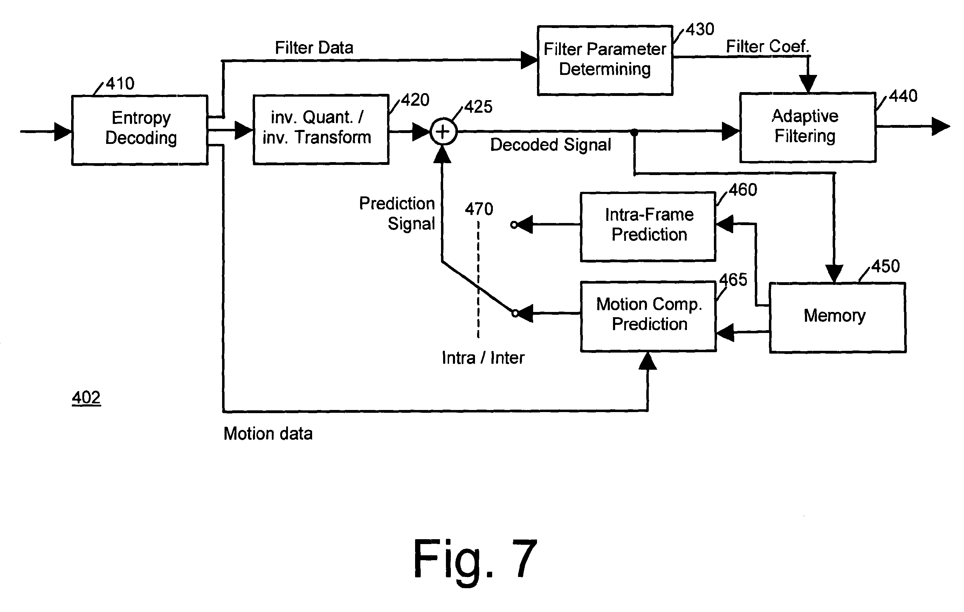

For example, the above-described system may be included in a predictive image encoding / decoding system, as illustrates in Figs. 6 and 7. In this case, the filtering may be applied only to, for instance, intra-coded images. Alternatively, different filter data may be generated and transmitted for intra-coded and inter-coded image data.

Fig. 6 illustrates an image encoder 302 employing a Differential Pulse Code Modulation (DPCM) approach for transmitting only the differences between subsequent images. As this image encoder already includes a decoding unit 330, the output of this decoded may be used to determine the filter data based on a comparison of original image data and decoded image data.

Fig. 7 illustrates a corresponding image decoder 402 for decoding and filtering image data in accordance with the encoder of Fig. 6. The decoder 410 extracts the filter data from the encoded image data. Based on extracted filter data, the filter parameters are determined and provided to the adaptive filter 440. The decoded image data is obtained by using previously decoded image data and a predictive image decoding approach. The decoded image data is filtered and the filtered image data is output.

Summarizing, it is the particular approach of the present invention to determine additional a *priori* information in an image encoder based on the undisturbed input image signal. As the original image data is not available in a decoder, a conventional decoder can only use decoded image data for determining adaptive filter coefficients. However, the decoded image data includes disturbances, for instance, quantization noise. The present invention generates additional filter data in an encoder based on the undisturbed image data. This additional data is attached to the corresponding encoded image data and provided to the decoder. The decoder analyzes the filter information and determines an adaptive set of filter parameters with respect to the additional a *priori* information. Based on the determined filter parameters, an adaptive filtering of the decoded image data is performed. In this way, the decoder applies an improved filtering.

## Claims

1. An image decoder for decoding a sequence of encoded image data, comprising:

   a decoding unit (420) for decoding encoded image data;
   a filter (440) for filtering decoded image data;

   **characterized by**

   a filter information extracting unit (410) for extracting filter data from the encoded image data; and
   a filter parameter determining unit (430) for determining a filter parameter based on the extracted filter data;
   wherein said filter (440) performing said filtering operation in accordance with the determined filter parameter.

2. An image decoder according to claim 1, wherein said filter data including an cross-correlation between uncorrupted image data and the corresponding decoded image data, said filter parameter determining unit (430) computing an auto-correlation function of the decoded image data and determining the filter parameter based on the extracted cross-correlation data and the computed auto-correlation data;

3. An image decoder according to claim 2, wherein said filter (440) being a Wiener filter.

4. An image decoder according to any of claims 1 to 3, wherein said filter parameter determining unit (430) dividing an image into a plurality of image areas and determining a separate filter parameter for each image area.

5. An image decoder according to any of claims 1 to 3, wherein said filter parameter determining unit (430) determining a common filter parameter for each image.

6. An image decoder according to any of claims 1 to 3, wherein said filter parameter determining unit (430) determining a common filter parameter for a plurality of images.

7. An image decoder according to any of claims 1 to 3, wherein the image being separated into a plurality of components, and said filter parameter determining unit (430) determining a filter parameter for each component individually.

8. An image decoder according to claim 7, wherein said filter parameter determining unit (430) determining a separate filter parameter for each color component.

9. An image decoder according to claim 7, wherein said filter parameter determining unit (430) determining a separate filter parameter for each luminance and chrominance component.

10. An image decoder according to any of claims 1 to 9, wherein said filter parameter extraction unit (410) extracting the filter parameter from a header of the encoded image data.

11. An image decoder according to any of claims 1 to 9, wherein said filter parameter extraction unit (410) extracting the filter parameter from an additional message inserted into the encoded image data.

12. An image decoder according to claim 11, wherein the additional information packet being a Supplemental enhancement information.

13. An image encoder for encoding a sequence of images, comprising:

    an encoding unit (320) for encoding image data; and
    a filter data generator (340) for determining filter data based on the image data to be encoded, the filter data serving as a basis for determining an adaptive filter parameter in an image decoder;

    wherein said filter data is inserted into the encoded image data.

14. An image encoder according to claim 13, wherein said filter data generator (340) determining the filter data on basis of at least on one of contrast, activity, statistical information, or a model parameter of the image data to be encoded.

15. An image encoder according to claims 13 or 14, further comprising

    a decoding unit (330) for decoding encoded image data,

    wherein said filter data generator (340) determining the filter data based on the image data to be encoded and the corresponding decoded image data.

16. An image encoder according to claim 15, wherein said filter data generator (340) calculation an cross-correlation function between the image data to be encoded and the corresponding decoded image data.

17. An image encoder according to any of claims 13 to 16, wherein the image data of each image is divided into a plurality of blocks which are individually encoded.

18. An image encoder according to claim 17, wherein said filter data generator (340) determining filter data for each image data block separately.

19. An image encoder according to any of claims 13 to 17, wherein said filter data generator (340) dividing the image into a plurality of image areas and determining filter data for each area individually.

20. An image encoder according to any of claims 13 to 17, wherein said filter data generator (340) determining filter data based on the image data of an complete image.

21. An image encoder according to any of claims 13 to 17, wherein said filter data generator (340) determining filter data based on image data of a plurality of images.

22. An image encoder according to any of claims 13 to 21, wherein the image data is separated into a plurality of components, and said filter data generator (340) determining filter data for each component individually.

23. An image encoder according to claim 22, wherein said filter data generator (340) determining filter data for a plurality of color components individually.

**24.** An image encoder according to claim 22, wherein said filter data generator (340) determining filter data for each luminance and chrominance component individually.

**25.** An image encoder according to any of claims 13 to 24, wherein the filter parameter being inserted into the header of the encoded image data

**26.** An image encoder according to any of claims 13 to 24, wherein the filter parameter being inserted into the encoded image data as an additional message.

**27.** An image encoder according to claim 26, wherein the additional message being a Supplemental enhancement information.

**28.** An image encoding and decoding system including an encoder (300) according to any of claims 1 to 12 and a decoder (400) according to any of claims 13 to 27.

**29.** An image decoding method for decoding a sequence of encoded image data, comprising the steps of:

    decoding encoded image data;
    filtering decoded image data;

**characterized by**

    extracting filter data from the encoded image data; and
    determining a filter parameter based on the extracted filter data;

    wherein said filtering step performing said filtering in accordance with the determined filter parameter.

**30.** An image decoding method according to claim 29, wherein said filter data including an cross-correlation between uncorrupted image data and the corresponding decoded image data, said method further comprising the step of:

    computing an auto-correlation between the decoded image data;

    wherein said determining step determining the filter parameter based on the extracted cross-correlation data and the computed auto-correlation data.

**31.** An image decoding method according to claim 30, wherein determining step determining a filter parameter for a Wiener filter.

**32.** An image decoding method according to any of claims 29 to 31, wherein said image is divided into a plurality of image areas and said determining step determining a common filter parameter for each image area.

**33.** An image decoding method according to any of claims 29 to 31, wherein said determining step determining a common filter parameter for each image.

**34.** An image decoding method according to any of claims 29 to 31, wherein said determining step determining a common filter parameter for a plurality of images.

**35.** An image decoding method according to any of claims 29 to 31, wherein the image being separated into a plurality of components, and said determining step determining a filter parameter for each component individually.

**36.** An image decoding method according to claim 35, wherein said determining step determining a separate filter parameter for each color component.

**37.** An image decoding method according to claim 35, wherein said determining step determining a separate filter parameter for each luminance and chrominance component.

**38.** An image decoding method according to any of claims 29 to 37, wherein said extracting step extracting the filter parameter from a header of the encoded image data.

**39.** An image decoding method according to any of claims 29 to 37, wherein said extracting step extracting from an additional message inserted into the encoded image data.

**40.** An image decoding method according to claim 39, wherein the additional information packet is a Supplemental enhancement information.

**41.** An image encoding method for encoding a sequence of images, comprising the steps of:

encoding image data;
determining filter data based on the image data to be encoded, the filter data serving as a basis for determining an adaptive filter parameter in an image decoder; and
inserting the filter data into the encoded image data.

**42.** An image encoding method according to claim 41, wherein said determining step determining the filter data on basis of at least on one of contrast, activity, statistical information, or a model parameter of the image data to be encoded.

**43.** An image encoding method according to claims 41 or 42, further comprising the step of:

ecoding encoded image data,

wherein said determining step determining the filter data based on the image data to be encoded and the corresponding decoded image data.

**44.** An image encoding method according to claim 43, wherein said determining step calculation an cross-correlation function between the image data to be encoded and the corresponding decoded image data.

**45.** An image encoding method according to any of claims 41 to 44, further dividing the image data of each image into a plurality of blocks, wherein each block is encoded individually.

**46.** An image encoding method according to claim 45, wherein said determining step determining filter data for each image data block separately.

**47.** An image encoding method according to any of claims 41 to 45, wherein said determining step dividing the image into a plurality of image areas and determining filter data for each area individually.

**48.** An image encoding method according to any of claims 41 to 45, wherein said determining step determining filter data based on the image data of an complete image.

**49.** An image encoding method according to any of claims 41 to 45, wherein said determining step determining filter data based on image data of a plurality of images.

**50.** An image encoding method according to any of claims 41 to 49, wherein the image data is separated into a plurality of components, and said filter data generator determining step determining filter data for each component individually.

**51.** An image encoding method according to claim 50, wherein said determining step determining filter data for a plurality of color components individually.

**52.** An image encoding method according to claim 50, wherein said determining step determining filter data for each luminance and chrominance component individually.

**53.** An image encoding method according to any of claims 41 to 52, further inserting the filter parameter into the header of the encoded image data

**54.** An image encoding method according to any of claims 41 to 52, further inserting the filter parameter into the encoded image data as an additional message.

**55.** An image encoding method according to claim 54, wherein the additional message is a Supplemental enhancement information.

**56.** An image encoding and decoding method including the encoding steps of any of claims 29 to 40 and the decoding steps of any of claims 41 to 55.

Fig. 1

EP 1 845 729 A1

Fig. 2

Fig. 3

EP 1 845 729 A1

Fig. 4

**Fig. 5**

400

- 410 Entropy Decoding
- 420 inv. Quant. / inv. Transform
- 430 Filter Coef. Determination
- 440 Adaptive Filtering

Decoded Signal
Filter Data
Filter Coefficients

Fig. 6

Fig. 7

**EP 1 845 729 A1**

**European Patent Office**

**EUROPEAN SEARCH REPORT**

Application Number

EP 06 00 7740

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 453 319 A (MATSUSHITA ELECTRIC INDUSTRIAL CO., LTD) 1 September 2004 (2004-09-01) | 1,13,28, 29,41,56 | INV. H04N7/26 |
| A | * abstract * * paragraph [0102] * * paragraph [0110] * * paragraph [0113] * * paragraphs [0116], [0117] * * paragraph [0120] * * figures 11,13 * | 1-56 | ADD. H04N7/30 |
| A | EP 1 404 136 A (NTT DOCOMO, INC) 31 March 2004 (2004-03-31) * abstract * * paragraphs [0040] - [0042] * * figure 16 * | 1-56 | |
| A | WO 2005/034517 A (THOMSON LICENSING S.A; TOURAPIS, ALEXANDROS; BOYCE, JILL, MACDONALD) 14 April 2005 (2005-04-14) * abstract * | 1-56 | |

TECHNICAL FIELDS SEARCHED (IPC)

H04N

The present search report has been drawn up for all claims

| Place of search | Date of completion of the search | Examiner |
|---|---|---|
| Munich | 15 September 2006 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

# EP 1 845 729 A1

## ANNEX TO THE EUROPEAN SEARCH REPORT
## ON EUROPEAN PATENT APPLICATION NO.                    EP 06 00 7740

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2006

| Patent document cited in search report | | Publication date | Patent family member(s) | | Publication date |
|---|---|---|---|---|---|
| EP 1453319 | A | 01-09-2004 | AU | 2002347635 A1 | 10-06-2003 |
| | | | AU | 2002349735 A1 | 10-06-2003 |
| | | | BR | 0206777 A | 25-02-2004 |
| | | | BR | 0206820 A | 03-02-2004 |
| | | | CA | 2433455 A1 | 05-06-2003 |
| | | | CA | 2435757 A1 | 05-06-2003 |
| | | | CN | 1526241 A | 01-09-2004 |
| | | | CN | 1489867 A | 14-04-2004 |
| | | | EP | 1452039 A2 | 01-09-2004 |
| | | | WO | 03047262 A2 | 05-06-2003 |
| | | | WO | 03047267 A1 | 05-06-2003 |
| | | | MX | PA03006640 A | 15-10-2003 |
| | | | MX | PA03006715 A | 24-10-2003 |
| EP 1404136 | A | 31-03-2004 | CN | 1465193 A | 31-12-2003 |
| | | | WO | 03003749 A1 | 09-01-2003 |
| | | | US | 2004184666 A1 | 23-09-2004 |
| WO 2005034517 | A | 14-04-2005 | EP | 1665804 A1 | 07-06-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050105627 A